(19) Europäisches Patentamt
European Patent Office
Office européen des brevets

(11) **EP 4 354 540 A1**

(12) **EUROPEAN PATENT APPLICATION**

(43) Date of publication:
**17.04.2024 Bulletin 2024/16**

(21) Application number: **23198576.3**

(22) Date of filing: **20.09.2023**

(51) International Patent Classification (IPC):
*H01M 4/1395* $^{(2010.01)}$    *H01M 4/36* $^{(2006.01)}$
*H01M 4/38* $^{(2006.01)}$    *H01M 4/587* $^{(2010.01)}$
*H01M 4/04* $^{(2006.01)}$    *H01M 4/1393* $^{(2010.01)}$
*H01M 4/133* $^{(2010.01)}$    *H01M 4/134* $^{(2010.01)}$
*H01M 4/02* $^{(2006.01)}$    *H01M 10/052* $^{(2010.01)}$

(52) Cooperative Patent Classification (CPC):
**H01M 4/1395; H01M 4/0471; H01M 4/1393;
H01M 4/366; H01M 4/386; H01M 4/587;**
H01M 4/0428; H01M 4/133; H01M 4/134;
H01M 10/052; H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.10.2022 KR 20220129071**

(71) Applicants:
• **SK Innovation Co., Ltd.**
**Seoul 03188 (KR)**
• **SK On Co., Ltd.**
**Seoul 03161 (KR)**

(72) Inventors:
• **KIM, Hee Soo**
**34124 Daejeon (KR)**
• **KIM, Yeon Ho**
**34124 Daejeon (KR)**
• **KIM, Young Kwang**
**34124 Daejeon (KR)**
• **CHEON, Young Eun**
**34124 Daejeon (KR)**
• **PARK, Gwi Ok**
**34124 Daejeon (KR)**
• **YOO, Seok Keun**
**34124 Daejeon (KR)**

(74) Representative: **Prüfer & Partner mbB
Patentanwälte · Rechtsanwälte
Sohnckestraße 12
81479 München (DE)**

(54) **SILICON-CARBON CONTAINING ELECTRODE MATERIAL AND SECONDARY BATTERY INCLUDING THE SAME**

(57) A silicon-carbon containing electrode material includes a porous carbon structure including pores, and a silicon-containing coating formed on the porous carbon structure. A volume ratio of mesopores is 70% or more based on a total pore volume of the porous carbon structure. A weight ratio of silicon is 30 wt% or more based on a total weight of the electrode material. A high-capacity secondary battery is effectively implemented by using silicon-carbon containing electrode material.

FIG. 1

EP 4 354 540 A1

**Description**

BACKGROUND

1. Field

The disclosure of the present application relates to a silicon-carbon containing electrode material and secondary battery including the same. More particularly, the disclosure of the present application relates to a silicon-carbon containing electrode material including a porous carbonaceous material and a secondary battery including the same.

2. Description of the Related Art

Carbon-based materials such as graphite, graphene and carbon nanotube have recently been used as various conductive materials or electrode materials according to the development of electronic, electric and information communication devices. For example, graphite-based materials are used as an anode material for a secondary battery, and a carbonaceous material such as carbon black, Super P and carbon nanotube are used as a conductive material for a cathode and an anode.

Recently, a battery pack including the secondary battery has been developed and applied as a power source for an eco-friendly vehicle such as an electric vehicle, and thus an electrode material providing higher capacity are being researched.

For example, silicon (Si) may be combined with the carbonaceous material to be used as a high-capacity anode material. The carbonaceous material may serve as a support for silicon and may function as a buffer material for suppressing instability of silicon-based material.

However, if a sufficient amount of a silicon activity is not provided through the carbonaceous material, high-capacity properties may not be sufficiently implemented, and non-uniformity of electrode properties may be caused.

SUMMARY

According to an aspect of the present disclosure, there is provided a silicon-carbon containing electrode material having increased total capacity and efficiency, in particular silicon utilization capacity at the same time and a method of preparing the same.

According to an aspect of the present invention, there is provided a lithium secondary battery having increased total capacity and efficiency, especially increased silicon utilization capacity.

A silicon-carbon containing electrode material includes a porous carbon structure including pores, and a silicon-containing coating formed on the porous carbon structure. A volume ratio of mesopores is 70% or more based on a total pore volume of the porous carbon structure, and a weight ratio of silicon is 30 wt% or more based on a total weight of the electrode material.

In some embodiments, the volume ratio of mesopores may be in a range from 75% to 98% based on the total pore volume of the porous carbon structure. The volume ratio of mesopores may preferably be in a range from 80% to 95% based on the total pore volume of the porous carbon structure .

In some embodiments, the weight ratio of silicon may be in a range from 30 wt% to 70 wt% based on the total weight of the electrode material. The weight ratio of silicon may preferably be in a range from 40 wt% to 60 wt% based on the total weight of the electrode material.

In some embodiments, the total pore volume of the porous carbon structure may be 0.8 $cm^3$/g or more.

In some embodiments, the total pore volume of the porous carbon structure may be in a range from 0.81 $cm^3$/g to 1.2 $cm^3$/g.

In some embodiments, the specific surface area of the porous carbon structure may be 650 $m^2$/g or more.

In some embodiments, the specific surface area of the porous carbon structure may be in a range of 670 $m^2$/g to 2,000 $m^2$/g.

In some embodiments, the silicon-containing coating formed on the porous carbon structure may include forming the silicon-containing coating on inner walls and on outer walls of the porous carbon structure. Optionally, on at least the outer walls of the porous carbon structure, a carbon coating may be further deposited.

In some embodiments, the pores of the porous carbon structure may include the mesopores and optionally further micropores and/or macropores. In some embodiments, an average diameter of the pores of the porous carbon structure may be 2 nm or more.

In some embodiments, an average diameter of the pores of the porous carbon structure may be in a range from 4 nm to 20 nm.

In a method of preparing a silicon-carbon containing electrode material, a polymer precursor solution is formed.

A polymer precursor included in the polymer precursor solution is polymerized to form a polymer gel. The polymer gel is dried and carbonized to form a bulk carbon structure. The bulk carbon structure is pulverized to form porous carbon structures. A silicon-containing coating is formed on the porous carbon structures. A volume ratio of mesopores is 70% or more based on a total pore volume of the porous carbon structures, and a weight ratio of silicon is 30 wt% or more based on a total weight of the electrode material.

In some embodiments, the polymer precursor may include a first precursor containing a phenol-based compound and a second precursor containing an aldehyde-based compound. A molar ratio of the second precursor to the first precursor may be adjusted in a range from 1 to 3.

In some embodiments, in forming the polymer precursor solution or polymerizing the polymer precursor, an alkaline polymerization catalyst may be added. A molar ratio of the first precursor to the polymerization catalyst may be adjusted in a range from 100 to 1,000.

In some embodiments, carbonizing the polymer gel may be performed at a temperature of 700°C or higher in an inert atmosphere.

In some embodiments, the silicon-containing coating may be formed by a deposition process performed at a temperature from 400°C to 800°C and a pressure from 700 torr to 800 torr.

In some embodiments, a silicon precursor and a carrier gas may be supplied in the deposition process, and a ratio of a flow rate of the silicon precursor to a flow rate of the carrier gas may be in a range from 1/50 to 1/3.

A silicon-carbon containing electrode material is prepared by the method of preparing a silicon-carbon containing electrode material.

A silicon-carbon-containing electrode material according to embodiments of the present disclosure includes a porous carbon structure and a silicon-containing coating formed on the porous carbon structure. The porous carbon structure may include mesopores in a specific ratio or more based on a total pore volume, and may provide a sufficient amount of a silicon coating.

Thus, a sufficient amount of a silicon activity above a desired ratio may be provided, and a substantially increased silicon utilization capacity can be provided. Accordingly, a high-capacity electrode material from the introduction of silicon may be effectively implemented.

In some embodiments, the carbon structure may have an average pore size and a specific surface area greater than or equal to a specific value, and thus an increased silicon coating area may be provided.

In example embodiments, the silicon-carbon containing electrode material may be used as an anode material of a lithium secondary battery to provide significantly increased capacity properties.


BRIEF DESCRIPTION OF THE DRAWINGS

FIG. 1 is a schematic cross-sectional view illustrating a silicon-carbon-containing electrode material in accordance with example embodiments.

FIG. 2 is a schematic cross-sectional view illustrating a formation of a silicon-containing coating in accordance with example embodiments.

FIG. 3 is a flowchart describing a method of preparing a silicon-carbon-containing electrode material in accordance with example embodiments.

FIGS. 4 and 5 are a schematic plan view and a schematic cross-sectional view, respectively, illustrating a secondary battery in accordance with example embodiments.


DETAILED DESCRIPTION OF THE EMBODIMENTS

According to embodiments of the present disclosure, a silicon-carbon-containing electrode material including a porous carbon structure and a silicon-containing coating is provided. Additionally, a secondary battery including the silicon-carbon containing electrode material is provided.

In example embodiments, the silicon-carbon-containing electrode material may be used as an anode material of a secondary battery. However, the use of the silicon-carbon-containing electrode material is not limited to the anode material, and may be used as a material having a conductivity or a charge storage property of various electric, electronic and electrochemical devices.

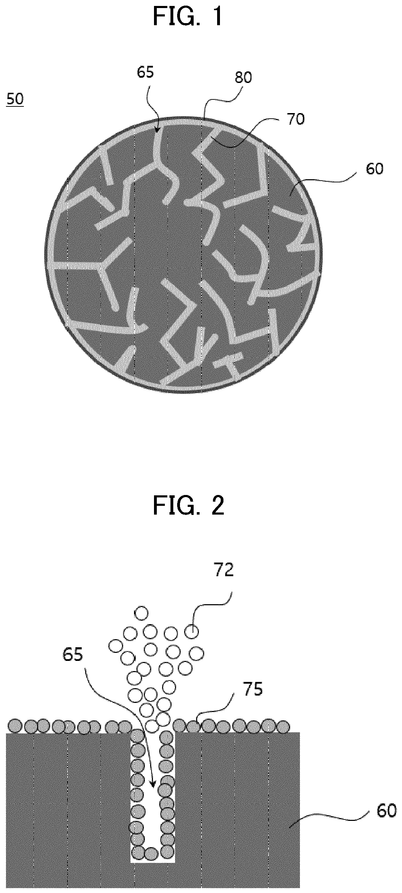

FIG. 1 is a schematic cross-sectional view illustrating a silicon-carbon-containing electrode material in accordance with example embodiments. FIG. 2 is a schematic cross-sectional view illustrating a formation of a silicon-containing coating in accordance with example embodiments.

A shape of the silicon-carbon-containing electrode material is schematically illustrated in FIG. 1 for convenience of descriptions, but the structure/shape of the silicon-carbon-containing electrode material is not limited to that illustrated in FIG. 1. For example, a cross-section of a porous carbon structure may be randomly changed from a circular shape, for example, to oval shape, irregular shape or polygonal shape.. Additionally, a silicon-containing coating may be partially formed on pores and a surface of the porous carbon structure, or may be formed as a plurality of discontinuous islands or patterns.

Referring to FIG. 1, a silicon-carbon(Si-C)-containing electrode material 50 includes a porous carbon structure 60 and a silicon (Si)-containing coating 70.

For example, the porous carbon structure 60 may include a carbonized polymer, e.g., a carbide material. The porous carbon structure 60 may include a plurality of pores 65.

The pores 65 may be formed from a surface of the porous carbon structure 60 to extend into an inside of the porous carbon structure 60.

The porous carbon structure 60 may include mesopores. In some embodiments, the porous carbon structure 60 may include micropores together with mesopores. In some embodiments, the porous carbon structure 60 may include the mesopores, the micropores and macropores.

The term "micropores" as used herein refers to pores having a diameter of less than 2 nm, the term "mesopores" as used herein refer to pores having a diameter ranging from 2 nm to 50 nm, and the term "macropores" as used herein refer to pores having a diameter greater than 50 nm.

According to embodiments of the present disclosure, a volume ratio of the mesopores to a total pore volume of the porous carbon structure 60 may be 70% or more. Within this range, the silicon-containing precursor gas may sufficiently enter the pores 65 while suppressing pore clogging, silicon grain aggregation, etc., and providing a sufficient silicon-derived activity. For example, the volume ratio of the mesopores relative to the total pore volume of the porous carbon structure 60 may be 75% or more.

In some embodiments, the volume ratio of the mesopores relative to the total pore volume of the porous carbon structure 60 may be 80% or more. In an embodiment, the volume ratio of the mesopores relative to the total pore volume of the porous carbon structure 60 may exceed 80%. For example, the volume ratio of the mesopores may be 81% or more, 85% or more, 87% or more, or 90% or more.

Within the above range, uniformity and coating amount of the silicon-containing coating may be more effectively improved.

An upper limit of the volume ratio of the mesopores may be adjusted in consideration of a specific surface area and a mechanical strength of the porous carbon structure 60. For example, the volume ratio of the mesopores may be adjusted to 98% or less. In some embodiments, the volume ratio of mesopores may be adjusted to 96% or less, or 95% or less. In an embodiment, the volume ratio of the mesopores may be adjusted to 94% or less, or 92% or less.

For example, the volume ratio of the mesopores may be adjusted in a range from 70% to 98%, from 70% to 95%, from 75% to 98%, from 75% to 95%, from 80% to 98%, or from 80% to 95%. In an embodiment, the volume ratio of the mesopores may exceed 80% and may be 98% or less in consideration of the above-described silicone coating properties and mechanical strength improvement of the particles. In an embodiment, the volume ratio of the mesopores may exceed 80% and may be 95% or less.

In an embodiment, the volume ratio of the mesopores may be from 85% to 95%, from 85% to 94%, or from 85% to 92%.

As described above, the ratio of the mesopores may be sufficiently increased so that the total pore volume included in the porous carbon structure 60 may be effectively increased.

In example embodiments, the total pore volume included in the porous carbon structure 60 may be 0.8 $cm^3$/g or more. Within this range, a sufficient silicon-containing coating may be formed at an inside of the pores 65. Accordingly, clogging of the pores, aggregation of silicon grains, etc., may be suppressed, and the sufficient silicon-derived activity may be provided. For example, the total pore volume may be 0.81 $cm^3$/g or more, 0.82 $cm^3$/g or more, or 0.85 $cm^3$/g or more.

In some embodiments, the total pore volume included in the porous carbon structure 60 may be 1.2 $cm^3$/g or less, 1.1 $cm^3$/g or less, or 1.0 $cm^3$/g or less. Within this range, particle cracks and reduction of the specific surface area due to an excessive increase of the pore volume may be prevented. In an embodiment, the total pore volume may be 0.99 $cm^3$/g or less, or 0.95 $cm^3$/g or less.

For example, the total pore volume may be in a range from 0.8 $cm^3$/g to 1.2 $cm^3$/g, from 0.8 $cm^3$/g to 1.1 $cm^3$/g, from 0.8 $cm^3$/g to 1.0 $cm^3$/g, from 0.8 $cm^3$/g to 0.99 $cm^3$/g, from 0.8 $cm^3$/g to 0.95 $cm^3$/g, from 0.81 $cm^3$/g to from 1.2 $cm^3$/g, from 0.81 $cm^3$/g to 1.1 $cm^3$/g, from 0.81 $cm^3$/g to 1.0 $cm^3$/g, from 0.81 $cm^3$/g to 0.99 $cm^3$/g, from 0.81 $cm^3$/g to 0.95 $cm^3$/g, from 0.85 $cm^3$/g to 1.2 $cm^3$/g, from 0.85 $cm^3$/g to 1.1 $cm^3$/g, from 0.85 $cm^3$/g to 1.0 $cm^3$/g, from 0.85 $cm^3$/g to 0.99 $cm^3$/g, or from 0.85 $cm^3$/g to 0.95 $cm^3$/g.

For example, the total pore volume and the distribution of the mesopores (volume ratio) can be measured using nitrogen gas adsorption/desorption according to a standard specified in ISO 15901-2 and ISO 15901-3.

A gas may be condensed in pores of a solid through a nitrogen gas adsorption to measure a porosity and a pore diameter distribution of a material. As a pressure increases, the nitrogen gas may be condensed in the smallest diameter pores in advance, and the pressure may increase until a saturation point is reached where all pores are filled with a liquid. Thereafter, the nitrogen gas pressure may be gradually reduced to evaporate the liquid from the system. A pore volume and pore distribution can be measured through a nitrogen adsorption and desorption isotherms and a hysteresis analysis therebetween.

An average diameter of the pores 65 included in the porous carbon structure 60 may be adjusted within a range capable of promoting the penetration of the silicon-containing coating 70 into and/or through the pores. In example embodiments, the average diameter of the pores 65 may be greater than or equal to 2 nm.

In some embodiments, the average diameter of the pores 65 may be 4 nm or more, or 5 nm or more. In an embodiment, the average diameter of the pores 65 may be 8 nm or more, or 10 nm or more.

In some embodiments, the average diameter of the pores 65 may be 20 nm or less, 15 nm or less, or 13 nm or less. Within this range, the reduction of the specific surface area and adhesion of the silicon-containing coating due to an excessive increase of the pore size may be prevented.

For example, the average diameter of the pores 65 may be in a range from 2 nm to 20 nm, from 2 nm to 15 nm, from 2 nm to 13 nm, from 4 nm to 20 nm, from 4 nm to 15 nm, from 4 nm to 13 nm, from 5 nm to 20 nm, from 5 nm to 15 nm, from 5 nm to 13 nm, from 8 nm to 20 nm, from 8 nm to 15 nm, from 8 nm to 13 nm , from 10 nm to 20 nm, from 10 nm to 15 nm, or from 10 nm to 13 nm. The diameter of the pores 65 may be adjusted by a solvent exchange inside the polymer from a solvent with high surface tension such as a water to that with low surface tension such as a acetone. The solvent exchange may depend on temperature and time period.

The average diameter of the pores 65 as used herein can be measured from a maximum peak position of a Barrett-Joyner-Halenda (BJH) pore size distribution curve obtained from a nitrogen gas sorption isotherm of a porous carbon structure sample.

In some embodiments, the specific surface area of the porous carbon structure 60 may be 650 $m^2$/g or more. In the above range, a silicon deposition area may be sufficiently achieved to increase a Si-derived effective capacity.

For example, the specific surface area of the porous carbon structure 60 may be 670 $m^2$/g or more, 680 $m^2$/g or more, or 690 $m^2$/g or more.

An upper limit of the specific surface area of the porous carbon structure 60 may be adjusted in consideration of instability of the electrode material by an excessive activation of the surface. For example, the specific surface area of the porous carbon structure 60 may be adjusted to 2,000 $m^2$/g or less, 1,500 $m^2$/g or less, 1,100 $m^2$/g or less, or 1,000 $m^2$/g or less, or 900 $m^2$/g or less.

For example, the specific surface area of the porous carbon structure 60 may be in a range from 650 $m^2$/g to 2,000 $m^2$/g, from 670 $m^2$/g to 2,000 $m^2$/g, from 680 $m^2$/g to 2,000 $m^2$/g, from 690 $m^2$/g to 2,000 $m^2$/g, from 650 $m^2$/g to 1,500 $m^2$/g, from 670 $m^2$/g to 1,500 $m^2$/g, from 680 $m^2$/g to 1,500 $m^2$/g, from 690 $m^2$/g to 1,500 $m^2$/g, from 650 $m^2$/g to 1,100 $m^2$/g, from 670 $m^2$/g to 1,100 $m^2$/g, from 680 $m^2$/g to from 1,100 $m^2$/g, from 690 $m^2$/g to 1,100 $m^2$/g, from 650 $m^2$/g to 1,000 $m^2$/g, from 670 $m^2$/g to 1,000 $m^2$/g, from 680 $m^2$/g to 1,000 $m^2$/g, or from 690 $m^2$/g to 1,000 $m^2$/g, from 650 $m^2$/g to 900 $m^2$/g, from 670 $m^2$/g to 900 $m^2$/g, from 680 $m^2$/g to 900 $m^2$/g, or from 690 $m^2$/g to 900 $m^2$/g.

For example, the specific surface area may refer to a surface area per unit mass calculated by measuring the physical adsorption of gas molecules on a solid surface using the Brunauer-Emmett-Teller (BET) theory according to the ISO 9277 standard.

From the above-described pore properties, the porous carbon structure 60 may have the increased specific surface area, and thus silicon deposition sites may be sufficiently achieved.

The silicon-containing coating 70 may be formed on the surface of the porous carbon structure 60. In example embodiments, the silicon-containing coating 70 may be formed on both an outer surface of the porous carbon structure 60 and an inner surface of the pores 65.

As schematically illustrated in FIG. 1, the pores 65 may be at least partially filled by the silicon-containing coating 70. In FIG. 1, the pores 65 are shown as being completely filled by the silicon-containing coating 70, but the pores 65 may be partially filled by the silicon-containing coating 70. In this case, the inner space of the pores 65 may further include a remaining space excluding a portion filled by the silicon-containing coating 70.

Referring to FIG. 2, the silicon-containing coating may be formed by a deposition process (e.g., a chemical vapor deposition (CVD) process). For example, a silicon precursor 72 may be supplied to the porous carbon structure 60 with pores 65. Silicon grains 75 may be formed from the silicon precursor 72. For example, the silicon precursor 72 including a silane-based compound (e.g., $SiH_4$) may decompose to produce the silicon grains 75($2SiH_4$ -> $2Si + 2H_2$). The silicon grains 75 may be deposited on the porous carbon structure 60 to form the silicon-containing coating 70 on inner walls of the pores 65.

As described above, the porous carbon structure 60 may have an increased mesopore volume ratio, and thus sufficient passages through which the silicon grains 75 are introduced be provided.

As illustrated in FIG. 2, the silicon grains 75 may be substantially uniformly deposited on the inner walls of the pores 65 while being deposited on an outer wall of the porous carbon structure 60. Thus, a uniform profile of the silicon-containing coating 70 may be formed throughout an entire surface of the porous carbon structure 60.

Additionally, a ratio of pores filled with the silicon-containing coating 70 among the pores 65 included in the porous carbon structure 60 may be increased, and the specific surface area increased by the pores 65 may be sufficiently utilized to improve an effective silicon capacity.

In example embodiments, a content of silicon (Si) may be 30 weight percent (wt%) or more based on a total weight of the silicon-carbon containing electrode material 50. Accordingly, sufficient silicon-derived high-capacity properties can be obtained by the above-described improved pore properties.

In some embodiments, the content of silicon (Si) may be 40 wt% or more. In an embodiment, the content of silicon (Si) may be 45 wt% or more, or 50 wt% or more.

An upper limit of the silicon (Si) content may be adjusted in consideration of electrode instability due to an excessive increase of the active material. For example, the content of silicon (Si) based on the total weight of the silicon-carbon containing electrode material 50 may be 70 wt% or less. In an embodiment, the content of silicon (Si) may be 65 wt% or less, or 60 wt% or less.

For example, the content of silicon (Si) may be in a range from 30 wt% to 70 wt%, from 30 wt% to 65 wt%, from 30 wt% to 60 wt%, from 40 wt% to 70 wt%, from 40 wt% to 65 wt%, from 40 wt% to 60 wt%, from 45 wt% to 70 wt%, from 45 wt% to 65 wt%, from 45 wt% to 60 wt%, from 50 wt% to 70 wt%, from 50 wt% to 65 wt%, or from 50 wt% to 60 wt% based on the total weight of the silicon-carbon-containing electrode material 50.

Referring to FIG. 1, in some embodiments, the porous carbon structure 60 may further include a carbon coating 80. The carbon coating 80 may include a polymer having improved elastic properties, e.g., an acrylonitrile-based polymer. Accordingly, expansion of the silicon-based active material may be suppressed and charge/discharge stability of a secondary battery may be improved.

In some embodiments, the carbon coating 80 may include a conductive polymer such as polypyrrole, polyaniline, polythiophene, poly 3,4-ethylenedioxythiophene, etc.

In some embodiments, a hydrocarbon precursor including an alkane such as methane, ethane or propane, an alkene such as ethylene or propylene, an alkyne such as acetylene, etc., may be decomposed at high temperature in an inert gas or anaerobic atmosphere; or a monomer/polymer solution may be polymerized and/or carbonized to form the carbon coating 80.

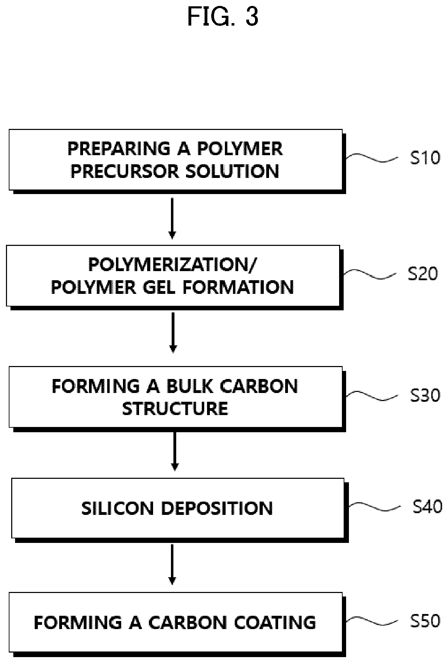

FIG. 3 is a flowchart describing a method of preparing a silicon-carbon-containing electrode material in accordance with example embodiments.

Referring to FIG. 3, in, e.g., a step S10, a polymer precursor solution may be prepared. The polymer precursor solution may be prepared as a sol state.

For example, a polymer precursor for a matrix formation in the porous carbon structure 60 may be dissolved in a polar solvent such as water or a protic solvent. The polymer precursor may include an amine group-containing compound, an alcohol-based compound, a carbonyl group-containing compound, etc.

For example, the polymer precursor may include a phenol-based compound, a polyalcohol, an alkyl amine, an aromatic amine, an aldehyde-based compound, a ketone-based compound, a carboxylic acid-based compound, an ester-based compound, urea, an acid halide, an isocyanate-based compound, etc. These may be used alone or in a combination thereof.

In some embodiments, a first precursor and a second precursor that are different from each other may be used together as the polymer precursor. For example, the first precursor may include a phenol-based compound, and the second precursor may include an aldehyde-based compound. In an embodiment, the first precursor may include resorcinol, and the second precursor may include formaldehyde.

In this case, a molar ratio of the second precursor to the first precursor may be adjusted in a range from 1 to 3. In an embodiment, the molar ratio may be adjusted in a range from 1 to 2.5 or from 1 to 2. In some embodiments, the molar ratio of the second precursor to the first precursor may exceed 1 and may be 3 or less (2.5 or less, or 2 or less).

For example, in step S20, a polymerization may be performed in the polymer precursor solution to form a polymer gel.

In example embodiments, a polymerization catalyst and/or a polymerization initiator may be added to the polymer precursor solution, and then the polymerization may be performed. Accordingly, the polymer may be generated in the solution to form a polymer gel.

In some embodiments, the polymerization catalyst may include an alkaline compound. For example, the polymerization catalyst may be an alkali metal or alkaline earth metal hydroxide; a carbonate of the alkali metal or the alkaline earth metal; an ammonium-based compound such as ammonium carbonate, ammonium bicarbonate, ammonium acetate and ammonium hydroxide; an amine-based compound such as diethylamine, triethylamine, triethanolamine, ethylenediamine and hexamethylenetetramine, etc. These may be used alone or in a combination thereof.

A molar ratio of the phenol-based compound (e.g., resorcinol) as the first precursor to the polymerization catalyst may be adjusted in a range from 100 to 1,000. Within the above range, sufficient formation of mesopores in the porous carbon structure 60 may be induced.

In an embodiment, the molar ratio of the first precursor to the polymerization catalyst may be in a range from 150 to 700, from 150 to 600, from 150 to 500, from 200 to 700, from 200 to 600, or from 200 to 500.

Non-limiting examples of the polymerization initiator include azobisisobutyronitrile (AIBN), t-butyl peracetate, benzoyl peroxide (BPO), acetyl peroxide, lauroyl peroxide, etc.

A polymerization temperature for forming the polymer gel may be in a range from about 70°C to 100°C, and a polymerization time may be in a range from 1 to 4 days, or from 2 to 3 days.

For example, a bulk carbon structure may be formed through drying and carbonization in, e.g., step S30.

In example embodiments, the solvent (e.g., water) in the polymer gel may be removed by drying. For example, pores may be formed in a space where the solvent is removed. The dried polymer may be carbonized to form the bulk carbon structure including the pores.

In some embodiments, the carbonization may be performed under an anaerobic condition or an inert gas (e.g., $N_2$ or Ar) condition. For example, the carbonization may be performed at a temperature of 700 °C or higher for an appropriate time to implement the above-described pore properties.

In an embodiment, the carbonization may be performed in a temperature range from 800 °C to 1,200 °C, from 800 °C to 1,100 °C, or from 850 °C to from 1,000 °C, or from 850 °C to 900 °C.

For example, in step S40, the bulk carbon structure may be pulverized to form a plurality of porous carbon structures 60.

As described with reference to FIG. 1, the porous carbon structure 60 includes pores 65 and has pore/surface properties such as the mesopore volume ratio, the total pore volume, the pore diameter and the specific surface area within the above-described range.

In example embodiments, the above-described pore/surface properties may be achieved by adjusting a combination of conditions including the molar ratio between the first precursor and the second precursor, the molar ratio between the catalyst and the second precursor, the polymerization temperature/polymerization time, the solvent exchange, the drying temperature/drying time, the carbonization temperature/the carbonization time, etc.

For example, in step S40, silicon may be deposited on the porous carbon structure 60 to form a silicon-containing coating 70.

In example embodiments, the silicon-containing coating 70 may be formed by a chemical vapor deposition (CVD) process or a physical vapor deposition (PVD) process using a silicon precursor. The silicon precursor may include a silane-based compound (e.g., SiH4).

For example, in the case of the CVD process, the silicon precursor may be supplied together with a carrier gas such as $N_2$ and/or Ar. As described above, the porous carbon structure 60 having the increased mesopore volume ratio may be used, so that a coating of high silicon such as 30 wt% or more or 40 wt% or more may be implemented.

In some embodiments, a ratio of a flow rate of the silicon precursor to a flow rate of the carrier gas may be in a range from 1/50 to 1/3. For example, the ratio of the flow rate of the silicon precursor to a flow rate of the carrier gas may be in a range from 1/20 to 1/3, or from 1/10 to 1/3.

Within the rage of the flow rate ratio, the high-content Si coating may be easily formed without causing a pore clogging.

In some embodiments, a flow rate containing the silicon precursor gas and a carrier gas may be in the range from 300 sccm (standard cubic centimeter per minute; $cm^3$/min) to 700 sccm, or from 400 sccm to 600 sccm, or 450 sccm to 550 sccm.

In some embodiments, the flow rate of the silicon precursor may be adjusted according to the amount of the porous carbon structure 60 loaded into the deposition chamber.

For example, the silicon precursor may be injected such that a space velocity (SV) defined by Equation 1 below may be maintained in an appropriate range.

[Equation 1]

$$SV\left(h^{-1}\right) = \frac{flow\ rate\ of\ silionc\ precursor\ (cc/h)}{carbon\ volume\ (cc)}$$

The carbon volume in Equation 1 may be calculated from a density of the porous carbon structure 60. In an embodiment, the space velocity (SV) of the silicon precursor may be controlled in a range from 100 $h^{-1}$ to 3,000 $h^{-1}$, from 500 $h^{-1}$ to 3,000 $h^{-1}$, or from 750 $h^{-1}$ to 2,500 $h^{-1}$.

Within the above range, a silicon deposition efficiency may be improved according to the amount of the porous carbon structure 60 loaded into the deposition chamber.

In some embodiments, the CVD process may be performed in a temperature range from 400°C to 800°C. For example, the CVD process may be performed in a temperature range from 450 °C to 750 °C, or from 500 °C to 700 °C.

In some embodiments, the CVD process may be performed at a pressure ranging from 700 torr to 800 torr. For example, the CVD process may be performed in a pressure range from 720 torr to 780, or from 740 torr to 780 torr.

In some embodiments, in, e.g., step S50, the carbon coating 80 may be further formed on the silicon-containing coating 70. The carbon coating 80 may be formed by a decomposition using a gas such as alkane/alkene/alkyne (e.g. methane) or a polymerization/carbonization using a monomer/polymer solution.

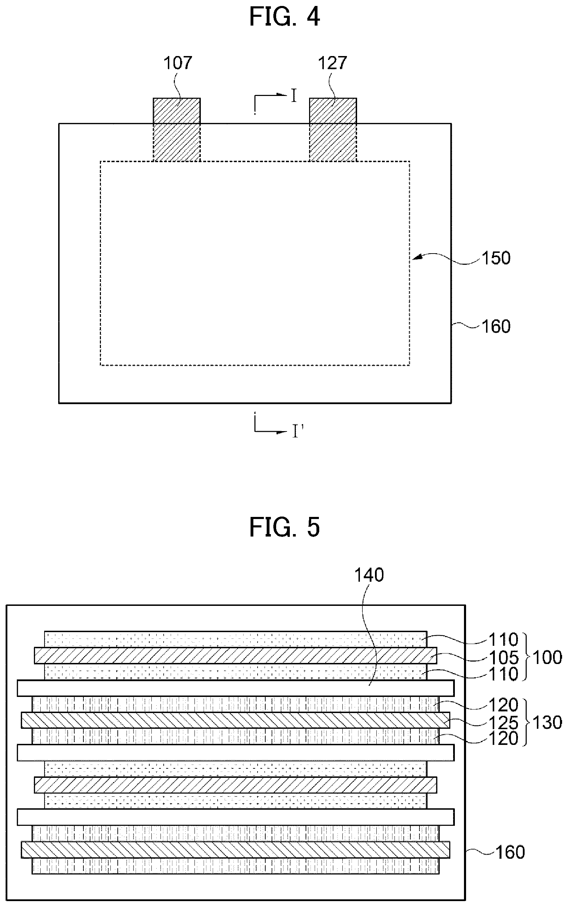

FIGS. 4 and 5 are a schematic plan and a schematic cross-sectional view, respectively, illustrating a secondary battery according to exemplary embodiments. FIG. 5 is a cross-sectional view taken along a line I-I' of FIG. 4.

Referring to FIGS. 4 and 5, the secondary battery may include an electrode assembly including a cathode 100 and an anode 130. The electrode assembly 150 may further include a separator 140 interposed between the cathode 100 and the anode 130. The electrode assembly 150 may be accommodated in a case 160 together with an electrolyte solution containing an electrolyte to be impregnated with the electrolyte solution.

The cathode 100 may include a cathode active material layer 110 formed by coating a cathode active material on a cathode current collector 105. The cathode active material may include a compound capable of reversibly intercalating and deintercalating lithium ions.

For example, a slurry may be prepared by mixing and stirring the cathode active material with a binder, conductive material and/or a dispersive agent in a solvent. The slurry may be coated on the cathode current collector 105, and then dried and pressed to form the cathode 100.

The cathode current collector 105 may include, e.g., stainless steel, nickel, aluminum, titanium, copper or an alloy thereof, and may include, e.g., aluminum or an aluminum alloy.

The binder may include an organic based binder such as a polyvinylidene fluoride-hexafluoropropylene copolymer (PVDF-co-HFP), polyvinylidene fluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as the cathode binder. In this case, an amount of the binder for forming the cathode active material layer may be reduced, and an amount of the cathode active material may be relatively increased. Thus, capacity and power of the lithium secondary battery may be further improved.

The conductive material may be included to promote an electron mobility between active material particles. For example, the conductive material may include a carbon-based conductive material such as graphite, carbon black, graphene, carbon nanotube, etc., and/or a metal-based conductive material such as tin, tin oxide, titanium oxide, a perovskite material such as $LaSrCoO_3$, $LaSrMnO_3$, etc.

The cathode active material may include a lithium-transition metal oxide, and the secondary battery may be provided as a lithium secondary battery. For example, the lithium-transition metal oxide may include nickel (Ni), and may further include at least one of manganese (Mn) and cobalt (Co).

The anode 130 may include an anode current collector 125 and an anode active material layer 120 formed by coating the anode active material on the anode current collector 125.

The anode current collector 125 may include gold, stainless steel, nickel, aluminum, titanium, copper, or an alloy thereof, and may include, e.g., copper or a copper alloy.

The anode active material layer 120 may include the silicon-carbon-containing electrode material 50 according to the above-described example embodiments as the anode active material. In some embodiments, the anode active material may further include a graphite-based active material such as artificial graphite or natural graphite.

In some embodiments, a content of the silicon-carbon-containing electrode material 50 may be 5 wt% or more based on a total weight of the anode active material. For example, the content of the silicon-carbon-containing electrode material 50 may be 10 wt% or more, 20 wt% or more, 30 wt% or more, 40 wt% or more, or 50 wt% or more.

In an embodiment, the content of the silicon-carbon-containing electrode material 50 may be adjusted to 95 wt% or less, 90 wt% or less, 80 wt% or less, or 70 wt% or less based on the total weight of the anode active material in consideration of a battery stability, e.g., suppression of an electrode swelling.

In an embodiment, the anode active material may substantially consist of the above-described silicon-carbon-containing electrode material 50. Excessive expansion of the anode due to silicon may be suppressed by using the silicon-carbon-containing electrode material 50 having the above-described porosity and silicon deposition properties.

For example, the anode active material may be included in an amount from 60 wt% to 99 wt% based on the total weight of the anode active material layer 120. In some embodiments, the anode active material may be included in an amount from 70 wt% to 98 wt%, or from 80 wt% to 98 wt% by weight based on the total weight of the anode active material layer 120.

For example, an anode slurry may be prepared by mixing and stirring the anode active material with a binder, a conductive material and/or a dispersive agent in a solvent. The anode slurry may be coated on the anode current collector 125, and then dried and pressed to form the anode active material layer 120.

Materials substantially the same as or similar to those used for forming the cathode 100 may also be used as the binder and the conductive material in the anode 130. In some embodiments, the binder for forming the anode 130 may include, e.g., styrene-butadiene rubber (SBR) or an acrylic binder for compatibility with a carbon-based active material, and a thickener such as carboxymethyl cellulose (CMC) may also be used.

The separator 140 may be interposed between the anode 100 and the cathode 130. The separator 140 may include a porous polymer film formed of a polyolefin-based polymer such as an ethylene homopolymer, a propylene homopolymer, an ethylene/butene copolymer, an ethylene/hexene copolymer, an ethylene/methacrylate copolymer, etc. The separator 140 may include a nonwoven fabric formed of a glass fiber having a high melting point, a polyethylene terephthalate fiber, etc.

In some embodiments, an area (e.g., a contact area with the separator 140) and/or a volume of the anode 130 may be greater than that of the cathode 100. Accordingly, transfer of lithium ions generated from the cathode 100 may be promoted to the anode 130 without precipitation or sedimentation.

In example embodiments, an electrode cell may be defined by the cathode 100, the anode 130 and the separator 140, and a plurality of the electrode cells may be stacked to form the electrode assembly 150 that may have e.g., a jelly roll shape. For example, the electrode assembly 150 may be formed by winding, stacking or folding of the separator 140.

The electrode assembly 150 may be accommodated together with an electrolyte solution in the case 160. In example embodiments, a non-aqueous electrolyte may be used as the electrolyte solution.

The non-aqueous electrolyte solution may include a lithium salt as an electrolyte and an organic solvent. The lithium salt may be represented by $Li^+X^-$ , and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 4, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

Preparation of porous carbon structures

A polymer precursor solution was prepared by mixing resorcinol and formaldehyde with water in a molar ratio of 1:2. The mixture of resorcinol and formaldehyde and water were mixed in a weight ratio of 1:10. Sodium carbonate was added as a catalyst to the polymer precursor solution. A molar ratio of resorcinol to catalyst was adjusted to 500. Thereafter, a polymerization was performed at 80°C for 3 days to form a polymer gel.

After the polymerization, the polymer gel was completely dried at 60 °C or less, and then carbonized at 850 °C in a $N_2$ atmosphere for at least 5 hours. The carbonized product was pulverized to prepare a porous carbon structure.

Deposition of silicon-containing coatings

A silicon-containing coating was deposited on the porous carbon structure by a CVD process using $SiH_4$ as a precursor.

Specifically, 7.5 g of the porous carbon structure prepared as described above was loaded into a CVD chamber, and a CVD process was performed under conditions of a temperature of 500 °C, a pressure of 760 torr, a $SiH_4$ flow rate of 50 sccm, a $N_2$ flow rate of 450 sccm, and a deposition time of 360 minutes.

Fabrication of anode

70 wt% of the silicon-carbon-containing electrode material prepared as described above as an anode active material, 15 wt% of Super P as a conductive material, and 15 wt% of polyacrylic acid (PAA) as a binder were mixed to form an anode slurry.

The anode slurry was coated on a copper substrate, dried and pressed to prepare an anode having an anode active material layer of which density is 1.5 g/cc. The density of the anode active material layer is calculated by density of current collector, thickness of the anode active material layer and total weight of the anode.

Fabrication of lithium half cell (Li-half cell)

A lithium half-cell including the anode prepared as described above and using a lithium metal as a counter electrode (cathode) was manufactured.

Specifically, a lithium coin half-cell was formed by interposing a separator (polyethylene, thickness of 20 $\mu$m) between the anode and the lithium metal (thickness of 1 mm).

Example 2

A silicon-carbon containing electrode material and a secondary battery were prepared by the same method as in Example 1, except that the CVD deposition time was changed to 1200 minutes, and the $SiH_4$ flow rate and the $N_2$ flow rate were changed to 25 sccm and 475 sccm, respectively, during silicon deposition.

Example 3

A silicon-carbon containing electrode material and a secondary battery were prepared by the same method as that in Example 1, except that the molar ratio of resorcinol to the catalyst was changed to 250 when preparing the porous carbon structure.

Example 4

A silicon-carbon containing electrode material and a secondary battery were prepared by the same method as that in Example 1, except that the CVD deposition time was changed to 660 minutes.

Example 5

A silicon-carbon containing electrode material and a secondary battery were prepared by the same method as that in Example 1, except that the CVD deposition time was changed to 765 minutes.

Example 6

A silicon-carbon containing electrode material and a secondary battery were prepared by the same method as that in Example 1, except that the CVD deposition time was changed to 450 minutes and the $SiH_4$ flow rate was changed to 100 sccm.

Example 7

A silicon-carbon containing electrode material and a secondary battery were prepared by the same method as that in Example 1, except that the polymer gel was washed with acetone at room temperature to remove residual water in the pores when drying the polymer gel, the CVD deposition time was changed to 660 minutes.

Example 8

A silicon-carbon containing electrode material and a secondary battery were prepared by the same method as that in Example 1, except that the carbonization temperature was changed to 950°C after polymerization.

Example 9

A silicon-carbon containing electrode material and a secondary battery were prepared by the same method as that in Example 1, except that the polymer gel was washed several times with acetone at 50 °C to remove residual water in the pores when drying the polymer gel.

Example 10

A silicon-carbon containing electrode material and a secondary battery were prepared by the same method as that in Example 1, except that the polymer gel was washed with acetone for 24 hours at 50 °C to remove residual water in the pores when drying the polymer gel, and the carbonization temperature was changed to 900°C.

Example 11

A silicon-carbon containing electrode material and a secondary battery were prepared by the same method as that in Example 1, except that the polymer gel was washed with acetone for 24 hours at 50 °C to remove residual water in the pores when drying the polymer gel, and the carbonization temperature was changed to 800°C.

Comparative Example 1

A commercially purchased carbonaceous structure having pore/surface properties as shown in Table 1 below was used. A silicon-carbon containing electrode material and a secondary battery were manufactured by performing the same silicon deposition process as that in Example 1, except that the CVD deposition time was changed to 600 minutes using 4 g (loading amount) of the carbon structure.

Comparative Example 2

A silicon-carbon containing electrode material and a secondary battery were prepared by the same method as that in Comparative Example 1, except that the carbon structure loading amount was changed to 3 g.

Comparative Example 3

A silicon-carbon containing electrode material and a secondary battery were prepared by the same method as that in Example 1, except that the molar ratio of resorcinol to the catalyst was changed to 83 when preparing the porous carbon structure.

Comparative Example 4

A silicon-carbon containing electrode material and a secondary battery were prepared by the same method as that in Example 1, except that the molar ratio of resorcinol to the catalyst was changed to 250, the weight ratio between the mixture of resorcinol and formaldehyde and water was changed to 1:12, the CVD deposition temperature was changed to 525°C, and the deposition time was changed to 180 minutes when preparing the porous carbon structure.
Properties of the porous carbon structure/silicon-carbon containing electrode material prepared according to Examples and Comparative Examples were measured/evaluated as follows.

(1) Measurement of total pore volume/mesopore volume ratio

A total pore volume and a mesopore distribution (volume ratio) were measured using a nitrogen gas adsorption at 77 K by a t-plot method according to ISO 15901-2 and ISO 15901-3 standards. Specifically, a 3-Flex Adsorption Analyzer manufactured by Micromeritics™ was used.

(2) Measurement of average pore size

A pore size of the porous carbon structure was measured using a 3-Flex adsorption analyzer from Micromeritics™. Specifically, a position of a maximum peak of a Barrett-Joyner-Halenda (BJH) pore size distribution curve obtained from a nitrogen gas adsorption/desorption isotherm of the porous carbon structure sample according to each of Examples and Comparative Examples was measured to measure the pore size of the porous carbon structure.

(3) Measurement of specific surface area

A specific surface area was calculated as a surface area per unit mass according to ISO 9277 standard using a 3-Flex Adsorption Analyzer system by measuring a physical adsorption of gas molecules on a solid surface.

(4) Measurement of Si content

Si contents in Si-C were measured using an ICP-OES analyzer. Specifically, the sample was put into a PP tube, and nitric acid and a small amount of hydrofluoric acid were added and dissolved for 12 hours. The dissolved sample was refrigerated, and hydrofluoric acid was neutralized with a saturated boric acid water and diluted with ultrapure water. Thereafter, residual carbon was removed with a 0.45um Syringe Filter and analyzed.

[Table 1]

| | properties of porous carbon structure | | | | Si content in silicon-carbon containing electrode material (wt%) |
|---|---|---|---|---|---|
| | total pore volume (cm³/g) | mesopore volume ratio (%) | average pore size (nm) | specific surface area (m²/g) | |
| Example 1 | 0.82 | 78 | 10.3 | 692 | 38 |
| Example 2 | 0.82 | 78 | 10.3 | 692 | 41 |
| Example 3 | 0.81 | 86 | 4.2 | 715 | 45 |
| Example 4 | 0.82 | 78 | 10.3 | 692 | 46 |
| Example 5 | 0.82 | 78 | 10.3 | 692 | 53 |
| Example 6 | 0.82 | 78 | 10.3 | 692 | 58 |
| Example 7 | 1.0 | 92 | 12.0 | 821 | 48 |
| Example 8 | 0.78 | 72 | 9.5 | 668 | 34 |
| Example 9 | 1.0 | 73 | 16 | 656 | 35 |
| Example 10 | 1.1 | 75 | 18 | 653 | 33 |
| Example 11 | 1.2 | 73 | 20 | 641 | 31 |
| Comparative Example 1 | 0.99 | 11 | <1.9 | 1752 | 57.8 |
| Comparative Example 2 | 0.99 | 11 | <1.9 | 1752 | 60.5 |
| Comparative Example 3 | 0.37 | 45 | 3.4 | 684 | 15 |
| Comparative Example 4 | 0.81 | 72 | 3.8 | 694 | 28 |

Experimental Example

The performance of the secondary battery using the silicon-carbon containing electrode material prepared according to each of Examples and Comparative Examples was measured/evaluated as follows.

(1) Measurement of discharge capacity

0.1C-rate CC/CV charge (0.01V, 0.01C cut-off) and 0.1C-rate CC discharge (1.5V cut-off) were performed at 25 °C for each secondary battery of Examples and Comparative Examples. Thereafter, a discharge capacity was measured.

(2) Evaluation of initial efficiency

An initial efficiency was calculated by calculating a ratio of the discharge capacity to a charge capacity measured in the above (1) as a percentage.

(3) Evaluation on Si utilization capacity

A Si utilization capacity refers to a capacity purely provided from silicon, excluding a capacity derived from the porous carbon structure in the silicon-carbon containing electrode material (SiC). The Si utilization capacity was calculated by Equation 2 below.

The porous carbon structures used in Examples and Comparative Examples have substantially the same or similar amorphous structure, and thus can be considered to have substantially the same theoretical capacity value (e.g., 250 mAh/g).

[Equation 2]

$$Si\ utilization\ capacity\ (mAh/g) = \frac{SiC\ capacity\ (mAh/g)\text{-}A}{silicon\ content\ in\ SiC\ (\%)} \times carbon\ content\ (\%)\ in\ SiC$$

A in the Eqation 2 is discharge capacity derived from porous carbon structure, i.e 250 mAh/g.
The evaluation results are shown in Table 2 below.

[Table 2]

|  | discharge capacity (mAh/g) | initial efficiency (%) | Si utilization capacity (mAh/g) |
|---|---|---|---|
| Example 1 | 1320 | 77.2 | 3,066 |
| Example 2 | 1373 | 78.0 | 2,989 |
| Example 3 | 1518 | 83.2 | 3,068 |
| Example 4 | 1656 | 85.7 | 3,307 |
| Example 5 | 2081 | 83.2 | 3,705 |
| Example 6 | 2156 | 91.9 | 3,536 |
| Example 7 | 1676 | 87.7 | 3,221 |
| Example 8 | 1272 | 74.2 | 3,256 |
| Example 9 | 1275 | 74.5 | 3,179 |
| Example 10 | 1250 | 73.2 | 3,280 |
| Example 11 | 1248 | 72.8 | 3,469 |
| Comparative Example 1 | 2032 | 92.3 | 3,333 |
| Comparative Example 2 | 1861 | 92.8 | 2,913 |
| Comparative Example 3 | 580 | 68.2 | 2,450 |
| Comparative Example 4 | 915 | 72.0 | 2,625 |

Referring to Table 2, as described above, improved capacity properties and Si utilization capacity were achieved in the porous carbon structures of Examples having the mesopore volume ratio of 70% or more and the Si content of 30 wt%.
In Comparative Example 1 and Comparative Example 2, the Si content was increased by over-depositing silicon on the porous carbon structure having the low mesopore volume ratio. Accordingly, a thick Si layer was deposited at an outside of the pores before Si was sufficiently deposited into the pores, and the Si utilization capacity compared to the discharge capacity was reduced.
In Comparative Example 3, both the mesopore volume ratio and the Si content were decreased, so the discharge capacity and the Si utilization capacity were explicitly reduced.
In Comparative Example 4, the Si deposition was not performed for sufficient time, and sufficient Si activity using the mesopores was not provided.
In Example 8, the total pore volume was reduced to less than 0.8 cm$^3$/g, and the Si content was reduced under the same CVD deposition condition as that in Example 1, and thus the discharge capacity and efficiency were relatively reduced.
In Examples 9 to 11, the Si content was lowered under the same CVD deposition condition as that in Example 1 while the discharge capacity and efficiency were relatively reduced. As the average pore size increased from Example 9 to 11, the Si utilization capacity were explicitly improved.

**Claims**

1. A silicon-carbon containing electrode material (50), comprising:

   a porous carbon structure (60) including pores (65); and
   a silicon-containing coating (70) formed on the porous carbon structure (60),
   wherein a volume ratio of mesopores is 70% or more based on a total pore volume of the porous carbon structure (60), and
   a weight ratio of silicon is 30 wt% or more based on a total weight of the electrode material (50).

2. The silicon-carbon containing electrode material (50) according to claim 1, wherein the volume ratio of mesopores is in a range from 75% to 98% based on the total pore volume of the porous carbon structure (60), preferably wherein the volume ratio of mesopores is in a range from 80% to 95% based on the total pore volume of the porous carbon structure (60).

3. The silicon-carbon containing electrode material (50) according to claim 1 or 2, wherein the weight ratio of silicon is in a range from 30 wt% to 70 wt% based on the total weight of the electrode material (50), preferably wherein the weight ratio of silicon is in a range from 40 wt% to 60 wt% based on the total weight of the electrode material (50).

4. The silicon-carbon containing electrode material (50) according to one of claims 1 to 3, wherein the total pore volume of the porous carbon structure is 0.8 $cm^3$/g or more,, preferably wherein the total pore volume of the porous carbon structure is in a range from 0.81 $cm^3$/g to 1.2 $cm^3$/g.

5. The silicon-carbon containing electrode material (50) according to one of claims 1 to 4, wherein the specific surface area of the porous carbon structure (60) is 650 $m^2$/g or more.

6. The silicon-carbon containing electrode material (60) according to one of claims 1 to 5, wherein the specific surface area of the porous carbon structure is in a range of 670 $m^2$/g to 2,000 $m^2$/g.

7. The silicon-carbon containing electrode material (50) according to one of claims 1 to 6, wherein the silicon-containing coating (70) formed on the porous carbon structure (60) includes forming the silicon-containing coating (70) on inner walls and on outer walls of the porous carbon structure (60), optionally wherein on at least the silicon-containing coating (70) formed on the outer walls of the porous carbon structure (60), a carbon coating (80) is further deposited.

8. The silicon-carbon containing electrode material (50) according to one of claims 1 to 7, wherein the pores of the porous carbon structure (60) includes the mesopores and optionally micropores and/or macropores, wherein the term "mesopores" refers to pores having a diameter ranging from 2 nm to 50 nm, the term "micropores" refers to pores having a diameter of less than 2 nm, and the term "macropores" refers to pores having a diameter greater than 50 nm, preferably wherein an average diameter of the pores of the porous carbon structure (60) is 2 nm or more, more preferably wherein an average diameter of the pores of the porous carbon structure is in a range from 4 nm to 20 nm.

9. A method of preparing a silicon-carbon containing electrode material, comprising:

   forming a polymer precursor solution;
   polymerizing a polymer precursor included in the polymer precursor solution to form a polymer gel.
   drying and carbonizing the polymer gel to form a bulk carbon structure;
   pulverizing the bulk carbon structure to form porous carbon structures; and
   forming a silicon-containing coating on the porous carbon structures,
   wherein a volume ratio of mesopores is 70% or more based on a total pore volume of the porous carbon structures, and a weight ratio of silicon is 30 wt% or more based on a total weight of the electrode material.

10. The method according to claim 9, wherein the polymer precursor comprises a first precursor containing a phenol-based compound and a second precursor containing an aldehyde-based compound, and a molar ratio of the second precursor to the first precursor is adjusted in a range from 1 to 3.

**11.** The method according to claim 10, wherein an alkaline polymerization catalyst is added at the step of forming the polymer precursor solution or at the step of polymerizing the polymer precursor, and
a molar ratio of the first precursor to the polymerization catalyst is adjusted in a range from 100 to 1,000.

**12.** The method according to claim 10 or 11, wherein carbonizing the polymer gel is performed at a temperature of 700°C or higher in an inert atmosphere.

**13.** The method according to one of claims 10 to 12, wherein the silicon-containing coating is formed by a deposition process performed at a temperature from 400°C to 800°C and a pressure from 700 Torr to 800 Torr.

**14.** The method according to claim 13, wherein the deposition process comprises supplying a silicon precursor and a carrier gas, and a ratio of a flow rate of the silicon precursor to a flow rate of the carrier gas is in a range from 1/50 to 1/3.

**15.** A lithium secondary battery including an anode comprising the silicon-carbon containing electrode material according to one of claims 1 to 8; and a cathode facing the anode.

# FIG. 1

# FIG. 2

FIG. 3

```
┌─────────────────────────────┐
│   PREPARING A POLYMER       │ ⟋ S10
│   PRECURSOR SOLUTION        │
└─────────────────────────────┘
              │
              ▼
┌─────────────────────────────┐
│   POLYMERIZATION/           │ ⟋ S20
│   POLYMER GEL FORMATION     │
└─────────────────────────────┘
              │
              ▼
┌─────────────────────────────┐
│   FORMING A BULK CARBON     │ ⟋ S30
│   STRUCTURE                 │
└─────────────────────────────┘
              │
              ▼
┌─────────────────────────────┐
│   SILICON DEPOSITION        │ ⟋ S40
└─────────────────────────────┘
              │
              ▼
┌─────────────────────────────┐
│   FORMING A CARBON COATING  │ ⟋ S50
└─────────────────────────────┘
```

# FIG. 4

# FIG. 5

Europäisches Patentamt
European Patent Office
Office européen des brevets

# EUROPEAN SEARCH REPORT

Application Number

EP 23 19 8576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/172246 A1 (ASPEN AEROGELS INC [US]) 18 August 2022 (2022-08-18) * claims 1, 15-17, 19, 22, 25, 28 * * page 47, line 17 * * page 5, line 15 – line 19 * * page 48, line 15 * * page 50, line 15 * * page 35, line 16 – line 17 * * page 12, line 8 – line 13 * * page 47, line 19 * * page 26, line 25 – line 35 * * page 27, line 1 – line 17 * * page 51, line 1 – line 2 * * page 51, line 6 * * page 51, line 10 – line 11 * * page 38, line 30 * * page 30 * * page 5, line 15 – line 18 * * page 25, line 4 – line 7 * * page 15, line 14 – line 15 * ----- | 1-15 | INV. H01M4/1395 H01M4/36 H01M4/38 H01M4/587 H01M4/04 H01M4/1393 ADD. H01M4/133 H01M4/134 H01M4/02 H01M10/052 |
| X | EP 3 836 261 A1 (GROUP14 TECH INC [US]) 16 June 2021 (2021-06-16) * table 4 * * claim 13 * * paragraphs [0022], [0050], [0069], [0070], [0127], [0147], [0135], [0251], [0167], [0091] * * paragraphs [0171], [0150], [0215] * ----- | 1-15 | TECHNICAL FIELDS SEARCHED (IPC) H01M |

The present search report has been drawn up for all claims

| Place of search | Date of completion of the search | Examiner |
|---|---|---|
| Munich | 6 March 2024 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

EP 4 354 540 A1

## ANNEX TO THE EUROPEAN SEARCH REPORT
## ON EUROPEAN PATENT APPLICATION NO.

EP 23 19 8576

06-03-2024

| Patent document cited in search report | | Publication date | Patent family member(s) | | Publication date |
|---|---|---|---|---|---|
| WO 2022172246 | A1 | 18-08-2022 | CN | 116941062 A | 24-10-2023 |
| | | | EP | 4292151 A1 | 20-12-2023 |
| | | | JP | 2024506186 A | 09-02-2024 |
| | | | KR | 20230146013 A | 18-10-2023 |
| | | | WO | 2022172246 A1 | 18-08-2022 |
| EP 3836261 | A1 | 16-06-2021 | CN | 108475779 A | 31-08-2018 |
| | | | CN | 113224274 A | 06-08-2021 |
| | | | EP | 3341990 A1 | 04-07-2018 |
| | | | EP | 3836261 A1 | 16-06-2021 |
| | | | EP | 4286355 A2 | 06-12-2023 |
| | | | JP | 7115976 B2 | 09-08-2022 |
| | | | JP | 2018534720 A | 22-11-2018 |
| | | | JP | 2022153561 A | 12-10-2022 |
| | | | KR | 20180113187 A | 15-10-2018 |
| | | | KR | 20230091915 A | 23-06-2023 |
| | | | KR | 20230092015 A | 23-06-2023 |
| | | | KR | 20240023451 A | 21-02-2024 |
| | | | US | 11495798 B1 | 08-11-2022 |
| | | | US | 2017170477 A1 | 15-06-2017 |
| | | | US | 2019280298 A1 | 12-09-2019 |
| | | | US | 2020075954 A1 | 05-03-2020 |
| | | | US | 2020152983 A1 | 14-05-2020 |
| | | | US | 2020365896 A1 | 19-11-2020 |
| | | | US | 2022231296 A1 | 21-07-2022 |
| | | | US | 2023058348 A1 | 23-02-2023 |
| | | | WO | 2017040299 A1 | 09-03-2017 |

EPO FORM P0459